# EUROPÄISCHE PATENTSCHRIFT

(11) **EP 0 831 111 B1**
(45) Veröffentlichungstag und Bekanntmachung des Hinweises auf die Patenterteilung: **06.05.1999**
(21) Anmeldenummer: 97115803.5
(22) Anmeldetag: 11.09.1997
(51) Int. Cl.: C08G 77/54

(54) **Aminogruppen aufweisende Organosiliciumverbindungen, deren Herstellung und Verwendung**
Amino groups containing organosilicon compounds, their preparation and their use
Composés organosiliciques contenant des groupes amino, leur préparation et leur emploi

(30) Priorität: 18.09.1996 DE 19638125
(43) Veröffentlichungstag der Anmeldung: 25.03.1998
(73) Patentinhaber: Wacker-Chemie GmbH, 81737 München (DE)
(72) Erfinder: Hierstetter, Thomas, Dr., 84489 Burghausen (DE); Dauth, Jochen, Dr., 84489 Burghausen (DE); Pfister, Jörg, 47805 Krefeld (DE); Deubzer, Bernward, Dr., 84489 Burghausen (DE)
(74) Vertreter: Deffner-Lehner, Maria, Dr.

(56) Entgegenhaltungen:
- EP-A- 0 523 660
- DE-A- 2 421 038
- GB-A- 1 409 741
- US-A- 3 203 825

## Beschreibung

Die Erfindung betrifft reaktive Aminogruppen aufweisende Organosiliciumverbindungen, deren Herstellung und Verwendung.

In der Veröffentlichung von K. Andrianov Izv, Akad. Nauk. SSSR, Ser. Khim, Heft 2, 351-356 (1968) wird die Umsetzung von Isopropyldiallylamin bzw. Triallylamin und 1,3-Dihydrotetramethyldisilazan bzw. 1,3-Dihydrotetramethyldisiloxan mittels Hydrosilylierung beschrieben. Dabei werden die Reaktanden im molaren Verhältnis von mindestens 2:1 bis etwa 5:1 bezogen auf eingesetztes 1,3-Dihydrotetramethyldisilazan oder 1,3-Dihydrotetramethyldisiloxan und Isopropyldiallylamin bzw. Triallylamin verwendet. Das eingesetzte 1,3-Dihydrotetramethyldisilazan oder 1,3-Dihydrotetramethyldisiloxan reagiert zu einem kleineren Teil (26-44%) jeweils einmal mit dem verwendeten Isopropyldiallylamin bzw. Triallylamin. Beispielsweise erhält man bei der Umsetzung von Triallylamin mit 1,3-Dihydrotetramethyldisiloxan Tris-[3-(1',1',3',3'-tetramethyldisiloxy)propyl]amin in nur 21%er Ausbeute als einzig isolierbare Verbindung, die jedoch keine Allylgruppen, sondern Si-gebundenen Wasserstoff, enthält.

In der Veröffentlichung von Du, Zuodong und Yu, Jing, Hecheng Xiangjiao Gongye 9(6), 388-92 (1986) werden Siliconkautschuke mit N,N-bisallyl-y-aminopropyl-Seitenketten beschrieben. Ihre Synthese verläuft über eine Hydrosilylierung des monofunktionellen Heptamethylcyclotetrasiloxans mit Triallylamin zu Heptamethyl-N,N-bisallyl-y-aminopropyl-cyclotetrasiloxan, welches durch Ringöffnung zum entsprechenden Polymer (Siliconkautschuk) umgesetzt wird. Es handelt sich dabei um eine Reaktion zwischen dem molekularen und monofunktionellen Heptamethylcyclotetrasiloxan-Baustein mit einem weiteren molekularen Baustein, dem Triallylamin, ohne der Gefahr einer Vernetzungsreaktion oder eines Kettenaufbaus. Die Synthese des Siliconkautschuks findet als Zweistufenreaktion über den Umweg der Hydrosilylierung des Triallylamins an Heptamethylcyclotetrasiloxan statt.

In EP 342 518 B1 (ausgegeben am 30.11.1994, General Electric Co.) wird ein Verfahren zur Herstellung von Stickstoff-Silicium-Verbindungen beschrieben, die durch eine Hydrosilylierung eines olefinischen Amins an Si-H-funktionelle Polydiorganosiloxane erhalten werden. Dabei werden als Amin-Komponenten Monoallylamine eingesetzt.

DE 43 44 082 C1 (ausgegeben am 22.12.1994, Th. Goldschmidt AG) beschreibt ein Verfahren zur Herstellung von Organopolysiloxanen mit über Kohlenstoff an Silicium gebundenen sekundären Aminoalkylgruppen. Dabei werden mittels Hydrosilylierung unter Platinkatalyse sekundäre Aminoalkene, die nur eine Doppelbindung pro Molekül enthalten, an Si-H-tragende Organosiliciumverbindungen addiert. Die erhaltenen Organopolysiloxane mit über Kohlenstoff an Silicium gebundenen sekundären Aminoalkylgruppen lassen sich anschließend gegebenenfalls beispielsweise mit cyclischen Polyorganosiloxanen equilibrieren.

Gegenstand der Erfindung sind Aminogruppen aufweisende Organosiliciumverbindungen enthaltend
a) Siloxaneinheiten der Formel

   RₐSi(OR¹)_{b}O_{(4-a-b)/2} (I)

   wobei
   - R: gleiche oder verschiedene, gegebenenfalls mit Halogenatomen, Alkoxy- oder Hydroxygruppen substituierte Kohlenwasserstoffreste mit 1 bis 18 Kohlenstoffatomen, die mit Sauerstoffatomen unterbrochen sein können, bedeutet,
   - R¹: gleiche oder verschiedene Alkylreste, die durch Sauerstoffatome unterbrochen sein können, bedeutet,
   - a: 0, 1, 2 oder 3 ist und
   - b: 0, 1, 2 oder 3 ist, mit der Maßgabe, daß die Summe a+b
   nicht größer als 3 ist,
   und
b) je Molekül mindestens eine Einheit, ausgewählt aus der Gruppe von Einheiten der Formeln

   AR_{c}SiO_{(4-c-1)/2} (II),

   O_{(4-c-1)/2}R_{c}Si-A¹-R_{c}SiO_{(4-c-1)/2} (III)

   oder 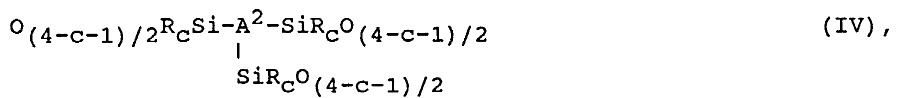 wobei
   - R: gleich oder verschieden sein kann und eine der oben angegebenen Bedeutungen hat,
   - c: gleich oder verschieden sein kann und 0, 1 oder 2, bevorzugt 2, bedeutet,
   - A: einen Rest der Formel

   -R²R³ _{z}N(-CR⁴ ₂-R⁵)_{(2-z)} (V),
   - A¹: einen Rest der Formel 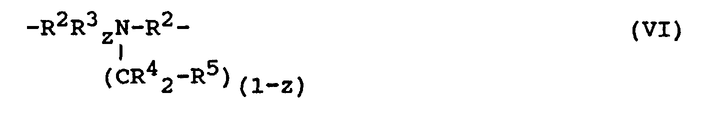 und
   - A²: einen Rest der Formel 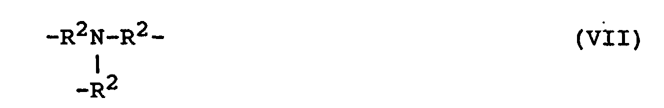 darstellt, wobei
   - z: 0 oder 1 ist,
   - R²: gleich oder verschieden sein kann und einen Alkylenrest mit 2 bis 8 Kohlenstoffatomen, einen Rest der Formel -CH=CH-CH₂-, 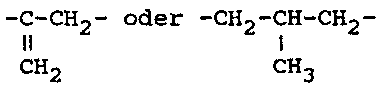 bedeutet,
   - R³: ein Wasserstoffatom oder einen Alkylrest mit 1 bis 8 Kohlenstoffatomen bedeutet,
   - R⁴: ein Wasserstoffatom oder einen Alkylrest mit 1 bis 8 Kohlenstoffatomen bedeutet,
   - R⁵: Reste der Formel -CR⁶=CR⁶₂, -C≡CR⁶ darstellen, wobei R⁶ gleich oder verschieden sein kann und Wasserstoffatom oder einen Alkylrest mit 1 bis 8 Kohlenstoffatomen bedeutet,
   mit der Maßgabe, daß die Aminogruppen aufweisende Organosiliciumverbindung je Molekül mindestens eine Siloxaneinheit der Formel (II) und je Molekül mindestens eine Einheit aus der Gruppe der Einheiten der Formeln (III) und (IV) aufweist.

Vorzugsweise enthalten die erfindungsgemäßen Organosiliciumverbindungen außer den Einheiten der Formeln (I), (II), (III) und (IV) keine weiteren Einheiten.

Beispiele für Rest R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest, Cycloalkylreste, wie der Cyclopentyl-, Cyclohexyl-, Cycloheptylrest und Methylcyclohexylreste, Alkenylreste, wie der Vinyl-, Allyl- und 2-Propenylrest, Alkinylreste, wie der Propargylrest, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der β-Phenylethylrest.

Beispiele für substituierte Kohlenwasserstoffreste R sind Halogenalkylreste, wie der 3,3,3-Trifluor-n-propylrest, der 2,2,2,2',2',2'-Hexafluorisopropylrest und der Heptafluorisopropylrest, und Halogenarylreste, wie der o-, m- und p-Chlorphenylrest, sowie Reste der Formel

-R⁷-[OCH₂CH₂]ₒ-[OCH(CH₃)CH₂]ₚ-[O(CH₂)₄]_{q}-OR⁸ (VIII),

wobei
- R⁷: ein Alkylenrest mit 1 bis 8 Kohlenstoffatomen, einen Arylen- oder Aralkylenrest bedeutet,
- R⁸: ein Wasserstoffatom, ein Alkylrest mit 1 bis 22 Kohlenstoffatomen oder ein Rest der Formel -CO-R⁹ bedeutet mit R⁹ gleich Alkylrest mit 1 bis 8 Kohlenstoffatomen,
- o: 0 oder eine ganze Zahl von 1 bis 100, bevorzugt 0 oder eine ganze Zahl von 3 bis 35,
- p: 0 oder eine ganze Zahl von 1 bis 100, bevorzugt 0 oder eine ganze Zahl von 3 bis 35, und
- q: 0 oder eine ganze Zahl von 1 bis 100 ist, bevorzugt 0 oder eine ganze Zahl von 3 bis 35, mit der Maßgabe, daß die Summe o+p+q>0 ist.

Bevorzugt handelt es sich bei Rest R um Methyl-, Ethyl-, Propyl-, Butyl-, Cyclohexyl- oder Vinylrest, wobei der Methylrest besonders bevorzugt ist.

Beispiele für Reste R⁷ sind lineare oder verzweigte Alkylenreste, wie etwa der Methylen-, 1,2-Ethylen-, 1,3-Propylen- und der 1,2-Propylenrest, wobei der 1,3-Propylen- und der 1,2-Propylenrest bevorzugt und der 1,3-Propylenrest besonders bevorzugt ist.

Beispiele für Rest R⁸ sind Wasserstoffatom sowie die für Rest R angegebenen Beispiele für Alkylreste, wobei Wasserstoffatom, der Methyl- und der n-Butylrest bevorzugt und Wasserstoffatom sowie der Methylrest besonders bevorzugt sind.

Beispiele für Reste R⁹ sind die für Rest R gleich Alkylreste mit 1 bis 8 Kohlenstoffatomen angegebenen Beispiele, wobei der Methylrest bevorzugt ist.

Beispiele für Reste R der Formel (VIII) sind
-(CH₂)₃-(OCH₂CH₂)₃-OCH₃, -(CH₂)₃-(OCH₂CH₂)₆-OCH₃,
-(CH₂)₃-(OCH₂CH₂)₃₅-OCH₃, -(CH₂)₃-(OCH(CH₃)CH₂)₃-OCH₃,
-(CH₂)₃-(OCH(CH₃)CH₂)₆-OCH₃, -(CH₂)₃-(OCH(CH₃)CH₂)₃₅-OCH₃,
-(CH₂)₃-(OCH₂CH₂)₃-(OCH(CH₃)CH₂)₃-OCH₃,
-(CH₂)₃-(OCH₂CH₂)₆-(OCH(CH₃)CH₂)₆-OCH₃,
-(CH₂)₃-(OCH₂CH₂)₃₅-(OCH(CH₃)CH₂)₃₅-OCH₃,
-(CH₂)₃-(OCH₂CH₂)₃-OH, -(CH₂)₃-(OCH₂CH₂)₆-OH,
-(CH₂)₃-(OCH₂CH₂)₃₅-OH, -(CH₂)₃-(OCH(CH₃)CH₂)₃-OH,
-(CH₂)₃-(OCH(CH₃)CH₂)₆-OH, -(CH₂)₃-(OCH(CH₃)CH₂)₃₅-OH,
-(CH₂)₃-(OCH₂CH₂)₃-(OCH(CH₃)CH₂)₃-OH,
-(CH₂)₃-(OCH₂CH₂)₆-(OCH(CH₃)CH₂)₆-OH,
-(CH₂)₃-(OCH₂CH₂)₃₅-(OCH(CH₃)CH₂)₃₅-OH und
-(CH₂)₃-(OCH₂CH₂)₁₈-(O(CH₂)₄)₁₈-OH.

Beispiele für Rest R¹ sind die für Rest R gleich Alkylreste angegebenen Beispiele sowie der Methoxyethyl- und Ethoxyethylrest, wobei es sich bei Rest R¹ bevorzugt um Alkylreste mit 1 bis 4 Kohlenstoffatomen, die durch Sauerstoffatome unterbrochen sein können, besonders bevorzugt um den Methyl- und den Ethylrest handelt.

Beispiele für den Rest R² sind lineare oder verzweigte Alkylenreste, wie etwa der 1,2-Ethylen-, 1,3-Propylen-, 1,2-Propylen-, 1,3-(2-Methylpropylen)- und Dimethylmethylenrest sowie -CH₂-CH=CH- und -C(CH₃)=CH-.

Bevorzugt handelt es sich bei Rest R² um 1,3-Propylen- und 1,2-Propylenrest sowie um -CH₂-CH=CH-, wobei der 1,3-Propylenrest besonders bevorzugt ist.

Beispiele für die Reste R³, R⁴ und R⁶ sind unabhängig voneinander Wasserstoffatom und die für Rest R angegebenen Beispiele für lineare und verzweigte Alkylreste mit 1 bis 8 Kohlenstoffatomen.

Bevorzugt handelt es sich bei Rest R³ um den Methyl-, Ethyl- und Cyclohexylrest.

Bevorzugt handelt es sich bei Rest R⁴ um Wasserstoffatom, Methyl- und Ethylrest, wobei Wasserstoffatom besonders bevorzugt ist.

Bevorzugt handelt es sich bei Rest R⁶ um Wasserstoffatom, Methyl- und Ethylrest, wobei Wasserstoffatom besonders bevorzugt ist.

Beispiele für den Rest R⁵ sind -CH=CH₂, -C(CH₃)=CH₂, -C≡CH, -C≡C-CH₃, -C≡C-C₂H₅, -CH=CH-CH₃, -CH=C(CH₃)₂, wobei -CH=CH₂ und -C≡CH bevorzugt und -CH=CH₂ besonders bevorzugt ist.

Beispiele für Reste A sind -(CH₂)₃-NH-CH₂CH=CH₂, -(CH₂)₃-N-(CH₂CH=CH₂)₂, -(CH₂-CH(CH₃)-CH₂)-NH-CH₂C(CH₃)=CH₂,-(CH₂-CH(CH₃)-CH₂)-N-(CH₂C(CH₃)=CH₂)₂, -(CH₂)₃-NH-CH₂C≡CH und-(CH₂)₃-N-(CH₂C≡CH)₂.

Beispiele für Reste A¹ sind -(CH₂)₃-NH-(CH₂)₃-, -CH=CH-CH₂-NH-CH₂CH=CH-, CH₂=CH-CH₂-N-(CH₂CH₂CH₂-)₂, (-CH=CH-CH₂)₂-N-CH₂C≡CH, HN-(CH₂CH(CH₃)CH₂-)₂ und CH₂=C(CH₃)-CH₂-N(CH₂CH(CH₃)CH₂-)₂.

Beispiele für Reste A² sind N-(CH₂CH₂CH₂-)₃, N-(CH₂CH=CH-)₃ und N-(CH₂CH(CH₃)CH₂-)₃ .

Beispiele für die erfindungsgemäßen Aminogruppen aufweisenden Organosiliciumverbindungen sind solche, die aufgebaut sind aus den folgenden Einheiten:
a) Me₂SiO_{2/2}, 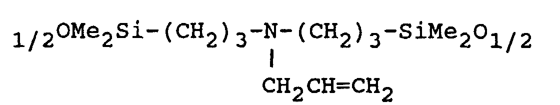 und _{1/2}OMe₂Si-(CH₂)₃-N-(CH₂CH=CH₂)₂
b) Me₂SiO_{2/2}, Me₃SiO_{1/2}, 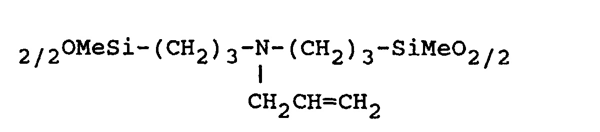 und _{2/2}OMeSi-(CH₂)₃-N-(CH₂CH=CH₂)₂
c) Me₂SiO_{2/2}, 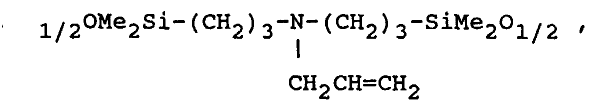 _{1/2}OMe₂Si-(CH₂)₃-N-(CH₂CH=CH₂)₂ ,
   _{2/2}OMeSi-(CH₂)₃-N-(CH₂CH=CH₂)₂ und 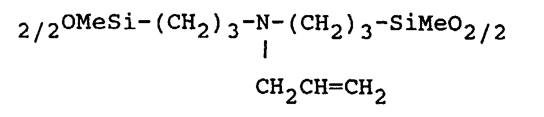
d) Me₃SiO_{1/2}, Me₂SiO_{2/2}, _{2/2}OMeSi-(CH=CH-CH₂)-N-(CH₂C≡CH)₂, und 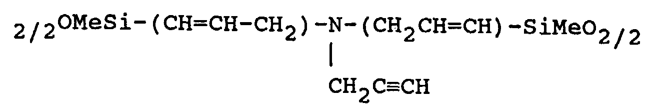
e) Me₂SiO_{2/2}, _{1/2}OMe₂Si-(CH=CH-CH₂)-N-(CH₂C≡CH)₂, 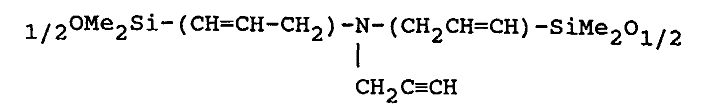
f) Me₂SiO_{2/2}, _{1/2}OMe₂Si-(CH=CH-CH₂)-N-(CH₂C≡CH)₂, 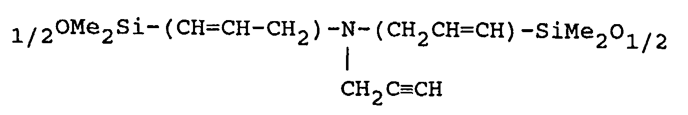 _{2/2}OMeSi-(CH=CH-CH₂)-N-(CH₂C≡CH)₂ und 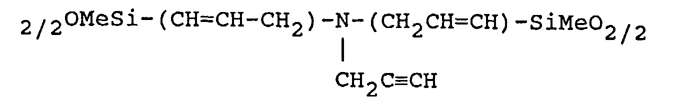
g) Me₃SiO_{1/2}, Me₂SiO_{2/2},
   _{2/2}OMeSi-(CH₂CH(Me)-CH₂)-N-(CH₂C(Me)=CH₂)₂ und 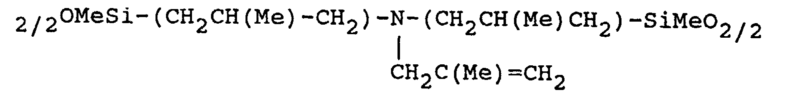
h) Me₂SiO_{2/2}, _{1/2}OMe₂Si-(CH₂CH(Me)-CH₂)-N-(CH₂C(Me)=CH₂)₂ und 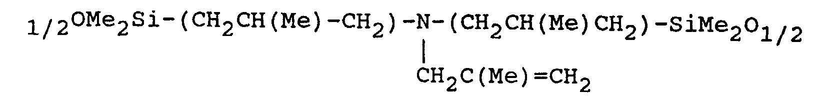
i) Me₂SiO_{2/2}, _{1/2}OMe₂Si-(CH₂CH(Me)-CH₂)-N-(CH₂C(Me)=CH₂)₂, 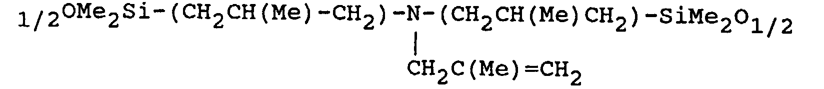 _{2/2}OMeSi-(CH₂CH(Me)-CH₂)-N-(CH₂C(Me)=CH₂)₂ und 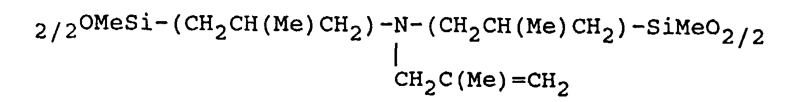
j) Me₃SiO_{1/2}, Me₂SiO_{2/2}, _{2/2}OMeSi-(CH=CH-CH₂)-NH-(CH₂C≡CH)
   und _{2/2}OMeSi-(CH=CH-CH₂)-NH-(CH₂CH=CH)-SiMeO_{2/2}
k) Me₂SiO_{2/2}, _{1/2}OMe₂Si-(CH=CH-CH₂)-NH-(CH₂C≡CH),
   _{1/2}OMe₂Si-(CH=CH-CH₂)-NH-(CH₂CH=CH)-SiMe₂O_{1/2}
l) Me₂SiO_{2/2}, _{1/2}OMe₂Si-(CH=CH-CH₂)-NH-(CH₂C≡CH),
   _{1/2}OMe₂Si-(CH=CH-CH₂)-NH-(CH₂CH=CH)-SiMe₂O_{1/2}
   _{2/2}OMeSi-(CH=CH-CH₂)-NH-(CH₂C≡CH) und
   _{2/2}OMeSi-(CH=CH-CH₂)-NH-(CH₂CH=CH)-SiMeO_{2/2}
m) Me₃SiO_{1/2}, Me₂SiO_{2/2},
   _{2/2}OMeSi-(CH₂CH(Me)-CH₂)-NH-(CH₂C(Me)=CH₂) und
   _{2/2}OMeSi-(CH₂CH(Me)CH₂)-NH-(CH₂CH(Me)CH₂)-SiMeO_{2/2}
n) Me₂SiO_{2/2}, _{1/2}OMe₂Si-(CH₂CH(Me)-CH₂)-NH-(CH₂C(Me)=CH₂),
   und _{1/2}OMe₂Si-(CH₂CH(Me)-CH₂)-NH-(CH₂CH(Me)CH₂)-SiMe₂O_{1/2}
o) Me₂SiO_{2/2}, _{1/2}OMe₂Si-(CH₂CH(Me)-CH₂)-NH-(CH₂C(Me)=CH₂),
   _{1/2}OMe₂Si-(CH₂CH(Me)-CH₂)-NH-(CH₂CH(Me)CH₂)-SiMe₂O_{1/2}
   _{2/2}OMeSi-(CH₂CH(Me)-CH₂)-NH-(CH₂C(Me)=CH₂) und
   _{2/2}OMeSi-(CH₂CH(Me)CH₂)-NH-(CH₂CH(Me)CH₂)-SiMeO_{2/2}
q) Me₂SiO_{2/2}, _{1/2}OMe₂Si-(CH₂)₃-NH-(CH₂)₃-SiMe₂O_{1/2} und
   _{1/2}OMe₂Si-(CH₂)₃-NH-CH₂CH=CH₂
r) Me₃SiO_{1/2}, Me₂SiO_{2/2}, _{2/2}OMeSi-(CH₂)₃-NH-CH₂CH=CH₂ und
   _{2/2}OMeSi-(CH₂)₃-NH-(CH₂)₃-SiMeO_{2/2}
s) Me₂SiO_{2/2}, _{1/2}OMe₂Si-(CH₂)₃-NH-(CH₂)₃-SiMe₂O_{1/2}
   _{1/2}OMe₂Si-(CH₂)₃-NH-CH₂CH=CH₂, _{2/2}OMeSi-(CH₂)₃-NH-CH₂CH=CH₂
   und _{2/2}OMeSi-(CH₂)₃-NH-(CH₂)₃-SiMeO_{2/2}
t) Me₂SiO_{2/2}, 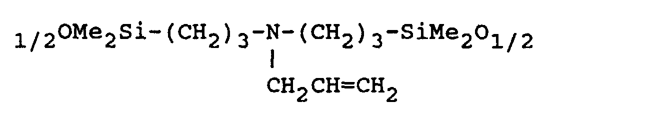 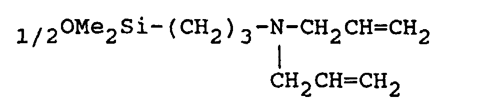 und _{2/2}OMeSi-(CH₂)₃-[OCH₂CH₂]₆-OMe,
wobei Me gleich Methylrest bedeutet.

Die erfindungsgemäßen Aminogruppen aufweisenden Organosiliciumverbindungen weisen eine Aminzahl von vorzugsweise 0,003 bis 6 auf, wobei die Aminzahl der Anzahl der ml 1-n-HCl, die zur Neutralisation von 1 g Substanz erforderlich sind, entspricht.

Die erfindungsgemäßen Aminogruppen aufweisenden Organosiliciumverbindungen besitzen vorzugsweise ein durchschnittliches Molekulargewicht von 500 bis 1 000 000 g/mol, besonders bevorzugt 5 000 bis 150 000 g/mol.

Die erfindungsgemäßen Aminogruppen aufweisenden Organosiliciumverbindungen haben vorzugsweise eine Viskosität von 10 bis 1 000 000 mm²/s, bevorzugt 20 bis 100 000 mm²/s, bei 25°C.

Bevorzugt handelt es sich bei den erfindungsgemäßen Aminogruppen aufweisenden Organosiliciumverbindungen um solche, die
a) Siloxaneinheiten der Formel

   R₂SiO (I'),
b) je Molekül mindestens zwei Siloxaneinheiten der Formel

   AR₂SiO_{1/2} (II')

   und je Molekül mindestens eine Einheit der Formel

   O_{1/2}R₂SiA¹R₂SiO_{1/2} (III'),

   wobei A, A¹ und R eine der oben dafür angegebenen Bedeutungen haben,
enthalten.

Besonders bevorzugt handelt es sich bei den erfindungsgemäßen Aminogruppen aufweisenden Organosiliciumverbindungen um solche, die aus Einheiten der Formel (I'), (II') und (III') bestehen, insbesondere um solche der folgenden Strukturformel:

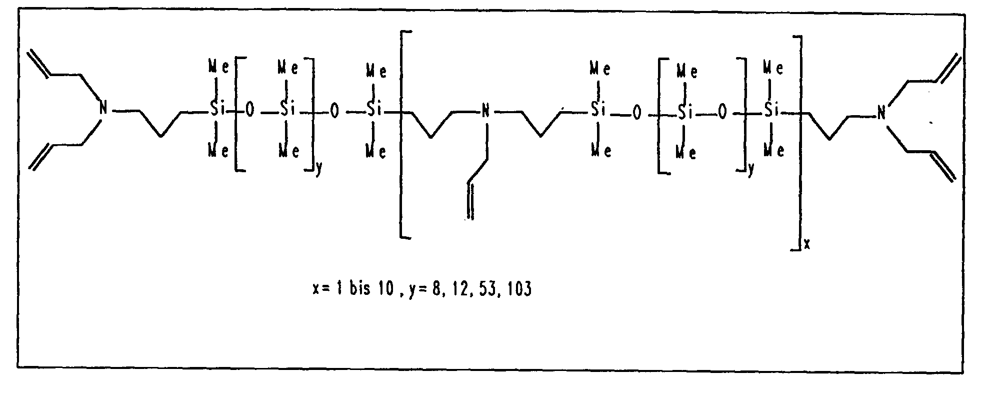

Ein weiterer Gegenstand der Erfindung ist ein Verfahren zur Herstellung der erfindungsgemäßen Aminogruppen aufweisenden Organosiliciumverbindungen, dadurch gekennzeichnet, daß Organosiliciumverbindungen aus Einheiten der allgemeinen Formel

H_{d}Rₑ(OR¹)_{f}SiO_{(4-e-d-f)/2} (II),

wobei
R und R¹ die oben dafür angegebene Bedeutung haben,
d 0 oder 1, durchschnittlich 0,01 bis 1, ist,
e 0, 1, 2 oder 3 ist und
f 0, 1, 2 oder 3 ist, mit der Maßgabe, daß die Summe d+e+f ≤ 3 ist und die Organosiliciumverbindung mindestens ein Si-gebundenes Wasserstoffatom aufweist,
mit Aminen der allgemeinen Formel

R³ _{z}N(-CR⁴ ₂-R⁵)_{(3-z)} (X),

wobei R³, R⁴, R⁵ und z die oben angegebene Bedeutung haben, in Anwesenheit von die Anlagerung von Si-gebundenem Wasserstoff an aliphatische Kohlenstoff-Kohlenstoff-Mehrfachbindung fördernden Katalysator umgesetzt werden.

Die erfindungsgemäß eingesetzten Organosiliciumverbindungen mit mindestens einem Si-gebundenen Wasserstoff aus Einheiten der Formel (IX) haben einen Gehalt an Si-gebundenem Wasserstoff von vorzugsweise mindestens 0,04 Gewichtsprozent, besonders bevorzugt 0,1 bis 1,6 Gewichtsprozent, auf.

Die erfindungsgemäß eingesetzten Organosiliciumverbindungen mit mindestens einem Si-gebundenen Wasserstoff aus Einheiten der Formel (IX) haben eine durchschnittliche Viskosität von vorzugsweise 5 bis 20 000 mm²/s, besonders bevorzugt 10 bis 5 000 mm²/s, insbesondere von 10 bis 2 000 mm²/s, jeweils bei 25°C.

Bei dem erfindungsgemäßen Verfahren werden als Organosiliciumverbindungen mit mindestens einem Si-gebundenen Wasserstoffatom je Molekül bevorzugt solche der Formel

H_{g}R_{3-g}SiO(SiR₂O)ᵣ(SiRHO)ₛSiR_{3-g}H_{g} (XI)

verwendet, wobei
- R: die oben dafür angebene Bedeutung hat,
- g: 0 oder 1 ist,
- r: 0 oder eine ganze Zahl von 1 bis 1500 ist, bevorzugt 1 bis 500, und
- s: 0 oder eine ganze Zahl von 1 bis 200 ist, bevorzugt 1 bis 100, mit der Maßgabe, daß die Organosiliciumverbindungen pro Molekül mindestens ein Si-gebundenes Wasserstoffatom aufweisen und die r Einheiten -(SiR₂O)- sowie die s Einheiten -(SiRHO)- beliebig im Molekül verteilt sein können.

Beispiele für die erfindungsgemäß eingesetzten Organosiliciumverbindungen mit mindestens einem Si-gebundenen Wasserstoffatom je Molekül sind α,ω-Trimethylsilyl-terminiertes Dimethyl/Methylhydrogenpolysiloxan,
α,ω-Dimethylhydrogensilyl-terminiertes Dimethylpolysiloxan, α,ω-Dimethylhydrogensilyl-terminiertes Dimethyl-/Methylhydrogenpolysiloxan mit einem Gehalt an Si-gebundenem Wasserstoff von 0,1 bis 1,6 Gewichtsprozent.

Die erfindungsgemäß eingesetzten Organosiliciumverbindungen mit mindestens einem Si-gebundenen Wasserstoffatom sind handelsübliche Produkte bzw. nach in der Siliciumchemie bekannten Verfahren herstellbar.

Beispiele für die erfindungsgemäß eingesetzten Amine der Formel (X) sind Diallylamin, Triallylamin, Dipropargylamin, Tripropargylamin, Tri-(2-Methallyl)-amin, Di-(2-Methallyl)-amin, Di-(2-Butenyl)amin, Tri-(2-Butenyl)amin, Methyl-diallylamin, Ethyl-diallylamin, Methyl-dipropargylamin und
Ethyl-dipropargylamin.

Bevorzugt handelt es sich bei den erfindungsgemäß eingesetzten Aminen der Formel (X) um Diallylamin, Triallylamin, Dipropargylamin, Tripropargylamin, Tri-(2-Methallyl)-amin und Methyl-diallylamin, wobei Diallylamin und Triallylamin besonders bevorzugt sind.

Die erfindungsgemäß eingesetzten Amine der Formel (X) sind handelsübliche Produkte bzw. nach in der organischen Chemie bekannten Verfahren herstellbar.

Bei dem erfindungsgemäßen Verfahren wird Amin der Formel (X) vorzugsweise in solchen Mengen eingesetzt, daß 1,1 bis 30 Mol, bevorzugt 1,5 bis 20 Mol, Amin je Grammatom Si-gebundener Wasserstoff in der Organosiliciumverbindung aus Einheiten der Formel (IX) vorliegen.

Als die Anlagerung von Si-gebundenem Wasserstoff an aliphatische Mehrfachbindung fördernde Katalysatoren können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern wie Siliciumdioxid, Aluminiumoxid oder Aktivkohle befinden kann, Verbindungen oder Komplexe von Platin, wie Platinhalogenide, z.B. PtCl₄, H₂PtCl₆· 6 H₂O, Na₂PtCl₆· 4 H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆· 6 H₂O und Cyclohexanon, Platin-Vinylsiloxankomplexe, wie Platin-1,3-divinyl-1,1,3,3-tetramethyldisiloxan-Komplexe mit oder ohne Gehalt an nachweisbarem anorganisch gebundenem Halogen, Bis-(y-picolin)-platindichlorid, Trimethylendipyridinplatindichlorid, Dicyclopentadienplatindichlorid, Dimethylsulfoxidethylenplatin-(II)-dichlorid, Cyclooctadien-Platindichlorid, Norbornadien-Platindichlorid, γ-Picolin- Platindichlorid, Cyclopentadien-Platindichlorid sowie Umsetzungsprodukte von Platintetrachlorid mit Olefin und primärem Amin oder sekundärem Amin oder primärem und sekundärem Amin gemäß US-A 42 92 434, wie das Umsetzungsprodukt aus in 1-Octen gelöstem Platintetrachlorid mit sec.-Butylamin, oder Ammonium-Platinkomplexe gemäß EP-B 1 10 370. Weiterhin können als die Hydrosilylierung fördernde Katalysatoren Verbindungen und Komplexe von Rhodium, wie die Rhodiumkomplexe gemäß EP-A 476 426, verwendet werden.

Bei dem erfindungsgemäßen Verfahren wird Katalysator in Mengen von vorzugsweise 2 bis 300 Gew.-ppm (Gewichtsteilen je Million Gewichtsteilen), besonders bevorzugt in Mengen von 5 bis 100 Gew.-ppm, eingesetzt, jeweils berechnet als elementares Platin und bezogen auf das Gesamtgewicht an eingesetztem Amin der Formel (X) und Si-gebundenen Wasserstoff aufweisender Organosiliciumverbindung aus Einheiten der Formel (IX).

Das erfindungsgemäße Verfahren wird vorzugsweise beim Druck der umgebenden Atmosphäre, also zwischen 900 und 1100 hPa durchgeführt; es kann aber auch bei höheren oder niedrigeren Drücken durchgeführt werden.

Das erfindungsgemäße Verfahren wird vorzugsweise bei einer Temperatur von 70 bis 150°C, bevorzugt 100 bis 130°C, durchgeführt.

Bei dem erfindungsgemäßen Verfahren können gegenüber der erfindungsgemäßen Umsetzung inerte, organische Lösungsmittel mitverwendet werden, was jedoch nicht bevorzugt ist.

Beispiele für solche inerten, organischen Lösungsmittel sind Toluol, Xylol, Isophoron, Octanisomere, Butylacetat und Isopropanol.

Nach Beendigung der erfindungsgemäßen Umsetzung kann die erhaltene Aminogruppen aufweisende Organosiliciumverbindung nach bekannten Verfahren isoliert werden, wie beispielsweise durch Entfernen, vorzugsweise durch Destillation, von überschüssigem Amin sowie gegebenenfalls mitverwendetem organischen Lösungsmittel.

Das erfindungsgemäße Verfahren hat den Vorteil, daß es einfach in der Durchführung ist und ein sehr hoher, vorzugsweise vollständiger Umsatz, erzielt wird. Trotz dieser Einfachheit der Reaktion(sführung) hat das erfindungsgemäße Verfahren ferner den Vorteil, daß der Anteil an aliphatisch ungesättigten Resten, die Viskosität und der Anteil an Siloxaneinheiten der Formeln (II), (III) und (IV) gezielt eingestellt werden kann.

Des weiteren hat das erfindungsgemäße Verfahren den Vorteil, daß die Organosiliciumverbindungen mit mindestens einem Si-gebundenen Wasserstoff mit den Aminen bei relativ niedriger Temperatur ohne Gefahr der Vernetzung oder Vergelung über die weiteren am Amin verbleibenden aliphatisch ungesättigten Gruppen und ohne Inhibierung des Katalysators polymeranalog mit kurzen Reaktionszeiten und ohne Verfärbung umgesetzt werden.

Falls erwünscht, können die nach dem erfindungsgemäßen Verfahren erhaltenen Aminogruppen aufweisenden Organosiliciumverbindungen mit Organopolysiloxanen (1), bevorzugt ausgewählt aus der Gruppe, bestehend aus linearen, endständige Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten, equilibriert werden, wodurch beispielsweise die Einstellung des gewünschten Molekulargewichts sowie die gezielte Verteilung der Aminogruppen im Molekül ermöglicht wird.

Vorzugsweise werden als lineare, endständige Triorganosiloxygruppen aufweisende Organopolysiloxane solche der Formel

R¹⁰ ₃SiO(SiR¹⁰ ₂O)ᵤSiR¹⁰ ₃ (XII),

als lineare, endständige Hydroxylgruppen aufweisende Organpolysiloxane solche der Formel

HO(SiR¹⁰ ₂O)ᵥH (XIII),

als cyclische Organopolysiloxane solche der Formel

(SiR¹⁰ ₂O)ₜ (XIV),

und als Mischpolymerisate solche aus Einheiten der Formel

R¹⁰ ₃SiO_{1/2}, R¹⁰ ₂SiO und R¹⁰SiO_{3/2}

eingesetzt, wobei
- R¹⁰: jeweils gleich oder verschieden sein kann und eine für R angegebene Bedeutung hat,
- u: 0 oder eine ganze Zahl von 1 bis 1500 ist,
- v: 0 oder eine ganze Zahl von 1 bis 1500 ist und
- t: eine ganze Zahl im Wert von 3 bis 12 ist.

Die Mengenverhältnisse der bei der gegebenenfalls durchgeführten Equilibrierung eingesetzten Organopolysiloxane (1) und erfindungsgemäß hergestellten Aminogruppen aufweisenden Organopolysiloxane werden lediglich durch den gewünschten Anteil der Aminogruppen in den bei der gegebenenfalls durchgeführten Equilibrierung erzeugten Organopolysiloxanen und durch die gewünschte mittlere Kettenlänge bestimmt.

Bei der gegebenenfalls durchgeführten Equilibrierung werden vorzugsweise basische Katalysatoren, welche die Equilibrierung fördern, eingesetzt. Beispiele für solche Katalysatoren sind Benzyltrimethylammoniumhydroxid, Tetramethylammoniumhydroxid, Alkalihydroxid und Erdalkalihydroxid in methanolischer Lösung sowie Silanolate. Bevorzugt sind hierbei Alkalihydroxide, welche in Mengen von vorzugsweise 50 bis 10 000 Gew.-ppm (Teile je Million), insbesondere 500 bis 2000 Gew.-ppm, jeweils bezogen auf das Gesamtgewicht der eingesetzten Organosiliciumverbindungen, verwendet wird.

Die gegebenenfalls durchgeführte Equilibrierung wird vorzugsweise bei 80 bis 150°C und beim Druck der umgebenden Atmosphäre, also zwischen 900 und 1100 hPa, durchgeführt. Es kann aber auch bei höheren oder niedrigeren Drücken durchgeführt werden.

Das Equilibrieren kann, falls erwünscht, in mit Wasser nicht mischbarem Lösungsmittel, wie Toluol, durchgeführt werden, was jedoch nicht bevorzugt ist. Falls solche organischen Lösungsmittel jedoch eingesetzt werden, sind Mengen von 5 bis 20 Gewichtsprozent, bezogen auf das Gesamtgewicht der eingesetzten Organosiliciumverbindungen, bevorzugt.

Vor dem Aufarbeiten des bei dem erfindungsgemäßen Equilibrieren erhaltenen Gemisches kann der Katalysator unwirksam gemacht werden.

Die erfindungsgemäßen bzw. erfindungsgemäß hergestellten Aminogruppen aufweisenden Organosiliciumverbindungen haben den Vorteil, daß sie geruchlos und transparent sind.

Des weiteren haben die erfindungsgemäßen bzw. erfindungsgemäß hergestellten Aminogruppen aufweisenden Organosiliciumverbindungen den Vorteil, daß sie mit Verbindungen mit Si-gebundenem Wasserstoff vernetzt werden können.

Die erfindungsgemäßen bzw. erfindungsgemäß hergestellten Organosiliciumverbindungen haben den Vorteil, daß sie radikalisch vernetzt werden können.

Ferner haben die erfindungsgemäßen bzw. erfindungsgemäß hergestellten Aminogruppen aufweisenden Organosiliciumverbindungen den Vorteil, daß sie als Liganden komplexierend auf Übergangsmetalle wirken.

Die erfindungsgemäßen bzw. erfindungsgemäß hergestellten Aminogruppen aufweisenden Organosiliciumverbindungen können für alle Zwecke eingesetzt werden, für die auch bisher Organosiliciumverbindungen mit Aminogruppen bzw. aliphatisch ungesättigten Resten verwendet wurden, wie beispielsweise für die Textilausrüstung, Faserbehandlung, für Teppiche, Lederausrüstung, für sog. Polish, in additionsvernetzbaren Systemen, wie Papierbeschichtungen, und in Kautschuken.

So können z.B. die erfindungsgemäßen bzw. erfindungsgemäß hergestellten Organosiliciumverbindungen in Zusammensetzungen, insbesondere Emulsionen, zur Behandlung von organischen Fasern aller Art, wie z.B. Textilien aus Baumwolle und/oder Kunstfasern, oder Leder verwendet werden, wobei solche erfindungsgemäßen Zusammensetzungen meist zu einer permanenten, hydrophilen Ausrüstung der genannten Materialien mit gegebenenfalls erwünschtem Weichgriff führen.

Die erfindungsgemäßen bzw. erfindungsgemäß hergestellten Organosiliciumverbindungen haben bei Verwendung in der Textilausrüstung den Vorteil, daß die damit ausgerüsteten Textilien eine geringe Vergilbung, eine sehr hohe Hydrophilie und einen sehr guten Weichgriff zeigen.

Ferner sind die erfindungsgemäßen bzw. erfindungsgemäß hergestellten Organosiliciumverbindungen als polymere Promotoren in additionsvernetzenden Systemen verwendbar. Sie beschleunigen die Vernetzung dieser Systeme und senken so die Topfzeit.

In den nachfolgenden Beispielen beziehen sich alle Angaben von Teilen und Prozentsätzen, soweit nicht anders angegeben ist, auf das Gewicht. Sofern nicht anders angegeben, werden die nachfolgenden Beispiele bei einem Druck der umgebenden Atmosphäre, also etwa bei 1000 hPa, und bei Raumtemperatur, also bei etwa 20°C bzw. bei einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

Als Jodzahl wird in den folgenden Beispielen die Zahl bezeichnet, welche die bei der Addition an die aliphatische Mehrfachbindung verbrauchte Jodmenge in Gramm pro 100 Gramm eingesetztes, zu untersuchendes Material, angibt.

### Beispiel 1

21,9 g Triallylamin (0,160 mol) werden unter Stickstoffinertisierung vorgelegt und auf 120°C aufgeheizt. Bei dieser Temperatur werden 465 µl (50 ppm Platin) eines Acetylacetonyl-cyclooctenyl-platin-(II)-acetylacetonat-Katalysators in Isobutylmethylketon zugegeben. Anschließend werden im Verlauf von 60 Minuten 60,0 g (0,159 mol Si-H) eines α,ω-Dihydrogenpolydimethylsiloxans mit einer Viskosität von 3,5 mm²/s zudosiert und das Reaktionsgemisch 3 Stunden lang bei einer Temperatur von 120°C unter Rückfluß gerührt. Danach erfolgt die Abtrennung der flüchtigen Bestandteile bei 110°C und einem Druck von 500 Pa (5 mbar). Nach Abkühlung und anschließender Filtration erhält man ein gelbliches Öl mit einer Viskosität von 75 mm²/s und einer Jodzahl von 81,38. Die Ausbeute beträgt 96,9 %.

### Beispiel 2

43,7 g Triallylamin (0,320 mol) werden unter Stickstoffinertisierung vorgelegt und auf 120°C aufgeheizt. Bei dieser Temperatur werden 537 µl (50 ppm Platin) eines Acetylacetonyl- cyclooctenyl-platin-(II)-acetylacetonat-Katalysators in Isobutylmethylketon zugegeben. Anschließend werden im Verlauf von 60 Minuten 50,0 g (0,091 mol Si-H) eines α,ω-Dihydrogenpolydimethylsiloxans mit einer Viskosität von 8,3 mm²/s zudosiert und das Reaktionsgemisch 7 Stunden lang bei einer Temperatur von 120°C unter Rückfluß gerührt. Danach erfolgt die Abtrennung der flüchtigen Bestandteile bei 110°C und einem Druck von 500 Pa (5 mbar). Nach Abkühlung und anschließender Filtration erhält man ein gelbliches Öl mit einer Viskosität von 30 mm²/s und einer Jodzahl von 71,63. Die Ausbeute beträgt 93,0 %.

### Beispiel 3

4,48 g Triallylamin (0,032 mol) werden unter Stickstoffinertisierung in 10,0 g Toluol vorgelegt und auf 120°C aufgeheizt. Bei dieser Temperatur werden 44 µl (50 ppm Platin) eines Hexachloroplatinsäure-Katalysators in Isopropanol zugegeben. Anschließend werden im Verlauf von 60 Minuten 64,0 g (0,032 mol Si-H) eines α,ω-Dihydrogenpolydimethylsiloxans mit einer Viskosität von 67,0 mm²/s zudosiert und das Reaktionsgemisch 10 Stunden lang bei einer Temperatur von 120°C unter Rückfluß gerührt. Danach erfolgt die Abtrennung der flüchtigen Bestandteile bei 110°C und einem Druck von 500 Pa (5 mbar). Nach Abkühlung und anschließender Filtration erhält man ein gelbliches Öl mit einer Viskosität von 304 mm²/s und einer Jodzahl von 14,84. Die Ausbeute beträgt 91,1 %.

### Beispiel 4

4,48 g Triallylamin (0,032 mol) werden unter Stickstoffinertisierung vorgelegt und auf 120°C aufgeheizt. Bei dieser Temperatur werden 430 µl (50 ppm Platin) eines Acetylacetonyl- cyclooctenyl-platin-(II)-acetylacetonat-Katalysators in Isobutylmethylketon zugegeben. Anschließend werden im Verlauf von 60 Minuten 64,0 g (0,032 mol Si-H) eines α,ω-Dihydrogenpolydimethylsiloxans mit einer Viskosität von 67,0 mm²/s zudosiert und das Reaktionsgemisch 2 Stunden lang bei einer Temperatur von 120°C gerührt. Danach erfolgt die Abtrennung der flüchtigen Bestandteile bei 110°C und einem Druck von 500 Pa (5 mbar). Nach Abkühlung und anschließender Filtration erhält man ein gelbliches Öl mit einer Viskosität von 400 mm²/s und einer Jodzahl von 15,89. Die Ausbeute beträgt 97,0 %.

### Beispiel 5

4,48 g Triallylamin (0,032 mol) und 64,0 g (0,032 mol Si-H) eines α,ω-Dihydrogenpolydimethylsiloxans mit einer Viskosität von 67,0 mm²/s werden unter Stickstoffinertisierung vorgelegt und auf 120°C aufgeheizt. Bei dieser Temperatur werden 44 µl (50 ppm Platin) eines Hexachloroplatinsäure-Katalysators in Isopropanol zugegeben. Anschließend wird das Reaktionsgemisch 10 Stunden lang bei einer Temperatur von 120°C gerührt. Danach erfolgte die Abtrennung der flüchtigen Bestandteile bei 110°C und einem Druck von 500 Pa (5 mbar). Nach Abkühlung und anschließender Filtration erhält man ein gelbliches Öl mit einer Viskosität von 351 mm²/s und einer Jodzahl von 15,13. Die Ausbeute beträgt 94,2 %.

### Beispiel 6

65,49 g Triallylamin (0,477 mol) werden unter Stickstoffinertisierung vorgelegt und auf 120°C aufgeheizt. Bei dieser Temperatur werden 3384 µl (50 ppm Platin) eines Acetylacetonylcyclooctenyl-platin-(II)-acetylacetonat-Katalysators in Isobutylmethylketon zugegeben. Anschließend werden im Verlauf von 60 Minuten 530,0 g (0,136 mol Si-H) eines α,ω-Dihydrogenpolydimethylsiloxans mit einer Viskosität von 171,0 mm²/s zudosiert und das Reaktionsgemisch 10 Stunden lang bei einer Temperatur von 120°C gerührt. Danach erfolgt die Abtrennung der flüchtigen Bestandteile bei 110°C und einem Druck von 500 Pa (5 mbar). Nach Abkühlung und anschließender Filtration erhält man ein gelbliches Öl mit einer Viskosität von 311 mm²/s und einer Jodzahl von 13,40. Die Ausbeute beträgt 94,2 %.

### Beispiel 7

32,93 g Triallylamin (0,240 mol) werden unter Stickstoffinertisierung vorgelegt und auf 120°C aufgeheizt. Bei dieser Temperatur werden 1114 µl (50 ppm Rhodium) eines Tris-(triphenylphosphin)-rhodium-(I)-chlorid-Katalysators in Toluol zugegeben. Anschließend werden im Verlauf von 60 Minuten 64,0 g (0,032 mol Si-H) eines α,ω-Dihydrogenpolydimethylsiloxans mit einer Viskosität von 67,0 mm²/s zudosiert und das Reaktionsgemisch 3 Stunden lang bei einer Temperatur von 120°C gerührt. Danach erfolgt die Abtrennung der flüchtigen Bestandteile bei 110°C und einem Druck von 500 Pa (5 mbar). Nach Abkühlung und anschließender Filtration erhält man ein gelbliches Öl mit einer Viskosität von 148 mm²/s und einer Jodzahl von 25,32. Die Ausbeute beträgt 98,4 %.

### Beispiel 8

### Stufe 1:

6,54 g (0,019 mol) eines allylierten Polyglykols (Methyl- bzw. Allyl-terminiert mit 6 Ethoxygruppen) mit einer Viskosität von 11,6 mm²/s, 90,0 g (0,039 mol Si-H) eines α,ω-Trimethylsilylterminierten Dimethyl/Methylhydrogenpolysiloxans der mittleren Kettenlänge 210 mit einer Viskosität von 675 mm²/s werden in 9,8 g n-Butylacetat vorgelegt und bei 100°C mit 25 µl (20 ppm Platin) eines Hexachloroplatinsäure-Katalysators in Isopropanol versetzt. Das Reaktionsgemisch wird 4 Stunden lang bei einer Temperatur von 100°C gerührt. Die Jodzahl beträgt 25,32 und der Umsatz 45,3 %.

### Stufe 2:

5,20 g Triallylamin (0,038 mol) werden unter Stickstoffinertisierung vorgelegt und auf 120°C aufgeheizt. Bei dieser Temperatur werden 522 µl (50 ppm Platin) eines Acetylacetonyl-cyclooctenyl-platin-(II)-acetylacetonat-Katalysators in Isobutylmethylketon zugegeben. Anschließend wird im Verlauf von 60 Minuten die Reaktionslösung aus Stufe 1 zudosiert. Das Reaktionsgemisch wird 5 Stunden lang bei einer Temperatur von 120°C gerührt. Danach erfolgt die Abtrennung der flüchtigen Bestandteile bei 110°C und einem Druck von 500 Pa (5 mbar). Nach Abkühlung und anschließender Filtration erhält man ein gelbliches Öl mit einer Viskosität von 1800 mm²/s. Die Ausbeute beträgt 95 %.

### Beispiel 9

3,825 g Diallylamin (39,37 mmol) werden vorgelegt und unter Stickstoffinertisierung auf 120°C aufgeheizt. Bei dieser Temperatur werden 475 ml (50 ppm Platin) eines Acetylacetonyl-cyclooctenylplatin-(II)-acetylacetonat-Katalysators in Methyl-iso-butylketon zugegeben. Anschließend werden im Verlauf von 60 Minuten 80 g (39,36 mmol) eines Polydimethylsiloxans mit α,ω-ständigen Hydrogengruppen und einer Viskosität von 67,0 mm²/s zudosiert und das Reaktionsgemisch 32 Stunden lang bei einer Temperatur von 120°C unter Rückfluß gerührt. Danach erfolgt die Abtrennung der niedermolekularen, flüchtigen Bestandteile bei 110°C und einem Druck von 500 Pa (5 mbar). Nach Abkühlung und anschließender Filtration erhält man ein gelbliches Öl mit einer Viskosität von 366 mm²/s, einer Jodzahl von 29,9 und einer Aminzahl von 0,43. Die Ausbeute beträgt 95,8 %.

### Beispiel 10

3,666 g Dipropargylamin (39,37 mmol) werden vorgelegt und unter Stickstoffinertisierung auf 120°C aufgeheizt. Bei dieser Temperatur werden 475 ml (50 ppm Platin) eines Acetylacetonylcyclooctenyl-platin-(II)-acetylacetonat-Katalysators in Methyl-iso-butylketon zugegeben. Anschließend werden im Verlauf von 60 Minuten 80 g (39,36 mmol) eines Polydimethylsiloxans mit α,ω-ständigen Hydrogengruppen und einer Viskosität von 67,0 mm²/s zudosiert und das Reaktionsgemisch 35 Stunden lang bei einer Temperatur von 120°C unter Rückfluß gerührt. Danach erfolgt die Abtrennung der niedermolekularen, flüchtigen Bestandteile bei 110°C und einem Druck von 500 Pa (5 mbar). Nach Abkühlung und anschließender Filtration erhält man ein gelbliches Öl mit einer Viskosität von 372 mm²/s, einer Jodzahl von 28,5 und einer Aminzahl von 0,38. Die Ausbeute beträgt 95,4 %.

### Beispiel 11

5,164 g Tripropargylamin (39,37 mmol) werden vorgelegt und unter Stickstoffinertisierung auf 120°C aufgeheizt. Bei dieser Temperatur werden 484 ml (50 ppm Platin) eines Acetylacetonylcyclooctenyl-platin-(II)-acetylacetonat-Katalysators in Methyl-iso-butylketon zugegeben. Anschließend werden im Verlauf von 60 Minuten 80 g (39,36 mmol) eines Polydimethylsiloxans mit α,ω-ständigen Hydrogengruppen und einer Viskosität von 67,0 mm²/s zudosiert und das Reaktionsgemisch 32 Stunden lang bei einer Temperatur von 120°C unter Rückfluß gerührt. Danach erfolgt die Abtrennung der niedermolekularen, flüchtigen Bestandteile bei 110°C und einem Druck von 500 Pa (5 mbar). Nach der Abkühlung und anschließender Filtration erhält man ein gelbliches Öl mit der Viskosität von 390 mm²/s, einer Jodzahl von 22,5 und einer Aminzahl von 0,40. Die Ausbeute beträgt 94,2 %.

## Patentansprüche

1. Aminogruppen aufweisende Organosiliciumverbindungen enthaltend
a) Siloxaneinheiten der Formel
RₐSi(OR¹)_{b}O_{(4-a-b)/2} (I)
wobei
R gleiche oder verschiedene, gegebenenfalls mit Halogenatomen, Alkoxy- oder Hydroxygruppen substituierte Kohlenwasserstoffreste mit 1 bis 18 Kohlenstoffatomen, die mit Sauerstoffatomen unterbrochen sein können, bedeutet,
R¹ gleiche oder verschiedene Alkylreste, die durch Sauerstoffatome unterbrochen sein können, bedeutet,
a 0, 1, 2 oder 3 ist und
b 0, 1, 2 oder 3 ist, mit der Maßgabe, daß die Summe a+b
nicht größer als 3 ist,
und
b) je Molekül mindestens eine Einheit, ausgewählt aus der Gruppe von Einheiten der Formeln
AR_{c}SiO_{(4-c-1)/2} (II),
O_{(4-c-1)/2}R_{c}Si-A¹-R_{c}SiO_{(4-c-1)/2} (III)
oder 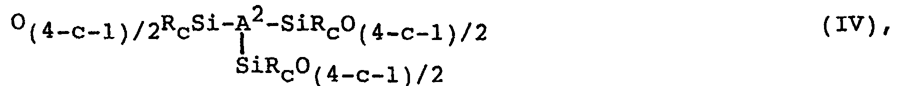 wobei
R gleich oder verschieden sein kann und eine der oben angegebenen Bedeutungen hat,
c gleich oder verschieden sein kann und 0, 1 oder 2 bedeutet,
A ein Rest der Formel
-R²R³ _{z}N(-CR⁴ ₂-R⁵)_{(2-z)} (V),
A¹ einen Rest der Formel 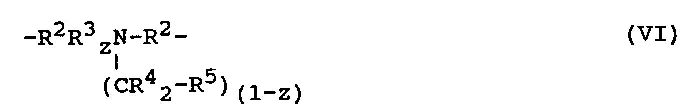 und
A² einen Rest der Formel 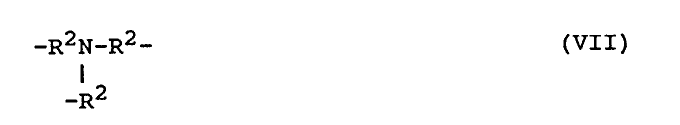 darstellt, wobei
z 0 oder 1 ist,
R² gleich oder verschieden sein kann und einen Alkylenrest mit 2 bis 8 Kohlenstoffatomen, einen Rest der Formel -CH=CH-CH₂-, 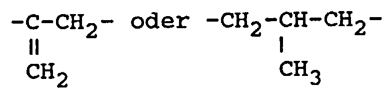 bedeutet,
R³ ein Wasserstoffatom oder einen Alkylrest mit 1 bis 8 Kohlenstoffatomen bedeutet,
R⁴ ein Wasserstoffatom oder einen Alkylrest mit 1 bis 8 Kohlenstoffatomen bedeutet,
R⁵ Reste der Formel -CR⁶=CR⁶₂, -C≡CR⁶ darstellen, wobei R⁶ gleich oder verschieden sein kann und Wasserstoffatom oder einen Alkylrest mit 1 bis 8 Kohlenstoffatomen bedeutet,
mit der Maßgabe, daß die Aminogruppen aufweisende Organosiliciumverbindung je Molekül mindestens eine Siloxaneinheit der Formel (II) und je Molekül mindestens eine Einheit aus der Gruppe der Einheiten der Formeln (III) und (IV) aufweist.

2. Aminogruppen aufweisende Organosiliciumverbindungen gemäß Anspruch 1, dadurch gekennzeichnet, daß es sich um solche handelt, die
a) Siloxaneinheiten der Formel
R₂SiO (I'),
b) je Molekül mindestens zwei Siloxaneinheiten der Formel
AR₂SiO_{1/2} (II')
und je Molekül mindestens eine Einheit der Formel
O_{1/2}R₂SiA¹R₂SiO_{1/2} (III'),
enthalten,
wobei A, A¹ und R eine der oben dafür angegebenen Bedeutungen haben.

3. Aminogruppen aufweisende Organosiliciumverbindungen gemäß Anspruch 1 oder 2, dadurch gekennzeichnet, daß es sich um solche handelt, die aus Einheiten der Formel (I'), (II') und (III') bestehen.

4. Verfahren zur Herstellung der erfindungsgemäßen Aminogruppen aufweisenden Organosiliciumverbindungen gemäß einem oder mehreren der Ansprüche 1 bis 3, dadurch gekennzeichnet, daß Organosiliciumverbindungen aus Einheiten der allgemeinen Formel
H_{d}Rₑ(OR¹)_{f}SiO_{(4-e-d-f)/2} (IX),
wobei
R und R¹ die oben dafür angegebene Bedeutung haben,
d 0 oder 1, durchschnittlich 0,01 bis 1, ist,
e 0, 1, 2 oder 3 ist und
f 0, 1, 2 oder 3 ist, mit der Maßgabe, daß die Summe d+e+f ≤ 3
ist und die Organosiliciumverbindung mindestens ein Si-gebundenes Wasserstoffatom aufweist,
mit Aminen der allgemeinen Formel
R³ _{z}N(-CR⁴ ₂-R⁵)_{(3-z)} (X)
wobei R³, R⁴, R⁵ und z die oben angegebene Bedeutung haben, in Anwesenheit von die Anlagerung von Si-gebundenem Wasserstoff an aliphatische Kohlenstoff-Kohlenstoff-Mehrfachbindung fördernden Katalysator umgesetzt werden.

5. Verfahren nach Anspruch 4, dadurch gekennzeichnet, daß als Organosiliciumverbindungen aus Einheiten der Formel (IX) solche der Formel
H_{g}R_{3-g}SiO(SiR₂O)ᵣ(SiRHO)ₛSiR_{3-g}H_{g} (XI)
verwendet werden, wobei
R die oben dafür angebene Bedeutung hat,
g 0 oder 1 ist,
r 0 oder eine ganze Zahl von 1 bis 1500 ist und
s 0 oder eine ganze Zahl von 1 bis 200 ist,
mit der Maßgabe, daß die Organosiliciumverbindungen pro Molekül mindestens ein Si-gebundenes Wasserstoffatom aufweisen und die r Einheiten -(SiR₂O)- sowie die s Einheiten -(SiRHO)- beliebig im Molekül verteilt sein können.

6. Verfahren nach Anspruch 4 oder 5, dadurch gekennzeichnet, daß Amin der Formel (X) in solchen Mengen eingesetzt wird, daß 1,1 bis 30 Mol, bevorzugt 1,5 bis 20 Mol, Amin je Grammatom Si-gebundener Wasserstoff in der Organosiliciumverbindung aus Einheiten der Formel (IX) vorliegen.

7. Verfahren nach einem oder mehreren der Ansprüche 4 bis 6, dadurch gekennzeichnet, daß Organosiliciumverbindungen aus Einheiten der allgemeinen Formel (IX), mit der Maßgabe, daß die Summe d+e+f ≤ 3 ist und die Organosiliciumverbindung mindestens ein Si-gebundenes Wasserstoffatom aufweist, mit Aminen der allgemeinen Formel (X) in Anwesenheit von die Anlagerung von Si-gebundenem Wasserstoff an aliphatische Kohlenstoff-Kohlenstoff-Mehrfachbindung fördernden Katalysator umgesetzt werden und die so erhaltenen Aminogruppen aufweisenden Organosiliciumverbindungen mit Organopolysiloxanen (1) equilibriert werden.

## Claims

1. Organosilicon compounds containing amino groups and comprising
a) siloxane units of the formula
RₐSi(OR¹)_{b}O_{(4-a-b)/2} (I)
where
R are identical or different hydrocarbon radicals which have from 1 to 18 carbon atoms, may be substituted by halogen atoms, alkoxy groups or hydroxy groups and can be interrupted by oxygen atoms,
R¹ are identical or different alkyl radicals which can be interrupted by oxygen atoms,
a is 0, 1, 2 or 3 and
b is O, 1, 2 or 3, with the proviso that the sum a+b is not greater than 3,
and
b) per molecule at least one unit selected from the group consisting of units of the formulae
AR_{c}SiO_{(4-c-1)/2} (II),
O_{(4-c-1)/2}R_{c}Si-A¹-R_{c}SiO_{(4-c-1)/2} (III)
or 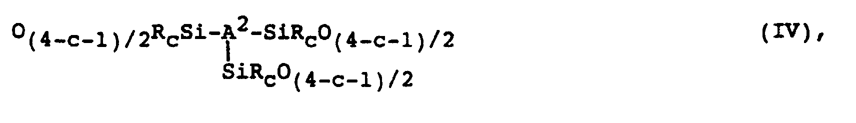 where
R can be identical or different and each have one of the meanings given above,
c can be identical or different and are each 0, 1 or 2,
A is a radical of the formula
-R²R³ _{z}N(-CR⁴ ₂-R⁵)_{(2-z)} (V),
A¹ is a radical of the formula 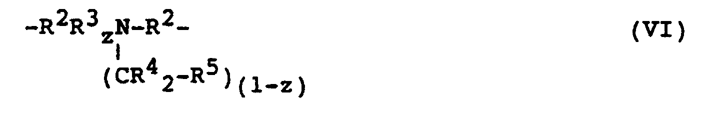 and
A² is a radical of the formula 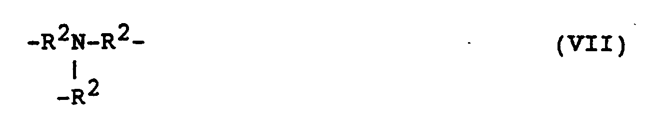 where
z is 0 or 1,
R² can be identical or different and are each an alkylene radical having from 2 to 8 carbon atoms, a radical of the formula -CH=CH-CH₂-, 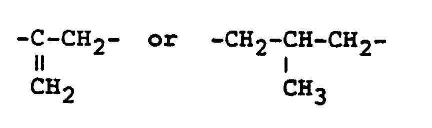
R³ is a hydrogen atom or an alkyl radical having from 1 to 8 carbon atoms,
R⁴ is a hydrogen atom or an alkyl radical having from 1 to 8 carbon atoms,
R⁵ are radicals of the formulae -CR⁶=CR⁶₂, -C≡CR⁶, where R⁶ can be identical or different and are each a hydrogen atom or an alkyl radical having from 1 to 8 carbon atoms,
with the proviso that the organosilicon compound containing amino groups has at least one siloxane unit of the formula (II) per molecule and at least one unit selected from the group consisting of units of the formulae (III) and (IV) per molecule.

2. Organosilicon compounds containing amino groups according to Claim 1, characterized in that these comprise
a) siloxane units of the formula
R₂SiO (I'),
b) per molecule at least two siloxane units of the formula
AR₂SiO_{1/2} (II'),
and per molecule at least one unit of the formula
O_{1/2}R₂SiA¹R₂SiO_{1/2} (III'),
where A, A¹ and R have one of the meanings given for them above.

3. Organosilicon compounds containing amino groups according to Claim 1 or 2, characterized in that these consist of units of the formulae (I'), (II') and (III').

4. Process for preparing the novel organosilicon compounds containing amino groups according to one or more of Claims 1 to 3, characterized in that organosilicon compounds comprising units of the general formula
H_{d}Rₑ(OR¹)_{f}SiO_{(4-e-d-f)/2} (IX),
where
R and R¹ have the meanings given for them above,
d is 0 or 1, on average from 0.01 to 1,
e is 0, 1, 2 or 3 and
f is 0, 1, 2 or 3, with the proviso that the sum d+e+f
is ≤ 3 and the organosilicon compound contains at least one Si-bonded hydrogen atom,
are reacted with amines of the general formula
R³ _{z}N(-CR⁴ ₂-R⁵)_{(3-z)} (X),
where R³, R⁴, R⁵ and z have the meanings given above, in the presence of catalysts which promote the addition of Si-bonded hydrogen onto aliphatic carbon-carbon multiple bonds.

5. Process according to Claim 4, characterized in that the organosilicon compounds comprising units of the formula (IX) which are used are those of the formula
H_{g}R_{3-g}SiO(SiR₂O)ᵣ(SiRHO)ₛSiR_{3-g}H_{g} (XI),
where
R has the meanings given for it above,
g is 0 or 1,
r is 0 or an integer from 1 to 1500 and
s is 0 or an integer from 1 to 200,
with the proviso that the organosilicon compounds contain at least one Si-bonded hydrogen atom per molecule and the r units -(SiR₂O)- and the s units -(SiRHO)- can have any distribution in the molecule.

6. Process according to Claim 4 or 5, characterized in that amine of the formula (X) is used in such amounts that from 1.1 to 30 mol, preferably from 1.5 to 20 mol, of amine are present per gram atom of Si-bonded hydrogen in the organosilicon compound comprising units of the formula (IX).

7. Process according to one or more of Claims 4 to 6, characterized in that organosilicon compounds comprising units of the general formula (IX), with the proviso that the sum of d+e+f is ≤ 3 and the organosilicon compound contains at least one Si-bonded hydrogen atom,
are reacted with amines of the general formula (X) in the presence of catalysts which promote the addition of Si-bonded hydrogen onto aliphatic carbon-carbon multiple bonds and the resulting organosilicon compounds containing amino groups are equilibrated with organopolysiloxanes (1).

## Revendications

1. Composés organosiliciés présentant des groupements amino, contenant
a) des unités siloxane de formule
RₐSi(OR¹)_{b}O_{(4-a-b)/2} (I)
dans laquelle
R signifie des radicaux hydrocarbonés avec 1 à 18 atomes de carbone, identiques ou différents, le cas échéant substitués avec des atomes d'halogène, des groupements alkoxy ou hydroxy, qui peuvent être interrompus par des atomes d'oxygène;
R¹ signifie des radicaux alkyle identiques ou différents, qui peuvent être interrompus par des atomes d'oxygène;
a est 0, 1, 2 ou 3, et
b est 0, 1, 2 ou 3, étant entendu que la somme a+b n'est pas supérieure à 3,
et
b) par molécule, au moins une unité sélectionnée dans le groupe des unités de formules
AR_{c}SiO_{(4-c-1)/2} (II),
O_{(4-c-1)/2}R_{c}Si-A¹-R_{c}SiO_{(4-c-1)/2} (III)
ou 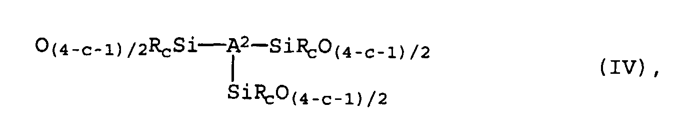 dans lesquelles
R peut être identique ou différent et a l'une des significations données ci-dessus;
c peut être identique ou différent et signifie 0, 1 ou 2;
A représente un radical de formule
-R²R³ _{z}N(-CR⁴ ₂-R⁵)_{(2-z)} (V),
A¹ représente un radical de formule 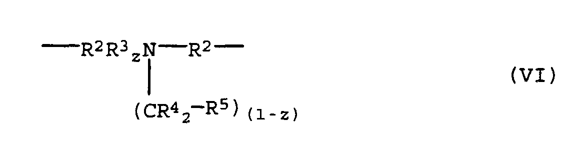 et
A² représente un radical de formule 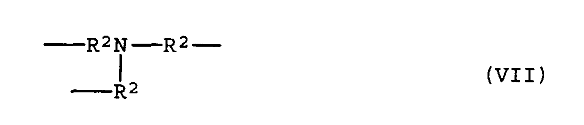 dans lesquelles
z est 0 ou 1;
R² peut être identique ou différent et signifie un radical alkylène avec 2 à 8 atomes de carbone, un radical de formule -CH=CH-CH₂-, 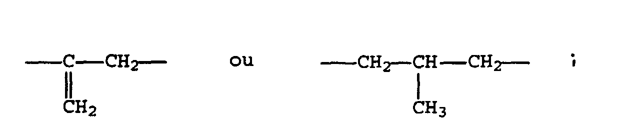
R³ signifie un atome d'hydrogène ou un radical alkyle avec 1 à 8 atomes de carbone;
R⁴ signifie un atome d'hydrogène ou un radical alkyle avec 1 à 8 atomes de carbone;
R⁵ représente des radicaux de formule -CR⁶=CR⁶₂, -C≡CR⁶, dans lesquels R⁶ peut être identique ou différent et signifie un atome d'hydrogène ou un radical alkyle avec 1 à 8 atomes de carbone,
étant entendu que le composé organosilicié présentant des groupements amino présente par molécule au moins une unité siloxane de formule (II) et par molécule au moins une unité du groupe des unités de formules (III) et (IV).

2. Composés organosiliciés présentant des groupements amino suivant la revendication 1, caractérisés en ce que ces composés sont ceux qui contiennent
a) des unités siloxane de formule
R₂SiO (I'),
b) par molécule au moins deux unités siloxane de formule
AR₂SiO_{1/2} (II'),
et par molécule au moins une unité de formule
O_{1/2}R₂SiA¹R₂SiO_{1/2} (III'),
dans lesquelles A, A¹ et R ont une des significations qui en sont données ci-dessus.

3. Composés organosiliciés présentant des groupements amino suivant la revendication 1 ou 2, caractérisés en ce que ces composés sont ceux qui sont constitués d'unités de formule (I'), (II') et (III').

4. Procédé de préparation des composés organosiliciés présentant des groupements amino suivant l'invention, suivant une ou plusieurs des revendications 1 à 3, caractérisé en ce que l'on fait réagir des composés organosiliciés formés d'unités de formule générale
H_{d}Rₑ(OR¹)_{f}SiO_{(4-e-d-f)/2} (IX),
dans laquelle
R et R¹ ont la signification qui en a été donnée ci-dessus;
d est 0 ou 1, en moyenne 0,01 à 1;
e est 0, 1, 2 ou 3, et
f est 0, 1, 2 ou 3, étant entendu que la somme d+e+f ≤ 3
et que le composé organosilicié présente au moins un atome d'hydrogène lié au Si,
avec des amines de formule générale
R³ _{z}N(-CR⁴ ₂-R⁵)_{(3-z)} (X),
dans laquelle R³, R⁴, R⁵ et z ont la signification donnée ci-dessus, en présence d'un catalyseur activant l'addition d'hydrogène lié au Si sur une liaison multiple aliphatique carbone-carbone.

5. Procédé suivant la revendication 4, caractérisé en ce que l'on utilise des composés organosiliciés formés d'unités de formule (IX) qui sont de formule
H_{g}R_{3-g}SiO(SiR₂O)ᵣ(SiRHO)ₛSiR_{3-g}H_{g} (XI)
dans laquelle
R a la signification qui en a été donnée ci-dessus;
g est 0 ou 1;
r est 0 ou un nombre entier de 1 à 1500, et
s est 0 ou un nombre entier de 1 à 200,
étant entendu que les composés organosiliciés présentent par molécule au moins un atome d'hydrogène lié au Si et que les r unités -(SiR₂O)- et les s unités -(SiRHO)-peuvent être réparties de manière quelconque dans la molécule.

6. Procédé suivant la revendication 4 ou 5, caractérisé en ce que l'on utilise l'amine de formule (X) en des quantités telles qu'on trouve 1,1 à 30 moles, de préférence 1,5 à 20 moles d'amine par mole d'atomes d'hydrogène lié au Si dans le composé organosilicié formé d'unités de formule (IX).

7. Procédé suivant une ou plusieurs des revendications 4 à 6, caractérisé en ce que l'on fait réagir des composés organosiliciés formés d'unités de formule générale (IX), étant entendu que la somme d+e+f ≤ 3 et que le composé organosilicié présente au moins un atome d'hydrogène lié au Si, avec des amines de formule générale (X), en présence d'un catalyseur activant l'addition d'hydrogène lié au Si sur une liaison multiple aliphatique carbone-carbone, et en ce que les composés organosiliciés présentant des liaison multiple aliphatique carbone-carbone, et en ce que les composés organosiliciés présentant des groupements amino, ainsi obtenus sont équilibrés avec des organopolysiloxanes (1).
